(19) Europäisches Patentamt
European Patent Office
Office européen des brevets

(11) **EP 4 404 399 A2**

(12) **EUROPEAN PATENT APPLICATION**

(43) Date of publication:
**24.07.2024 Bulletin 2024/30**

(21) Application number: **23219722.8**

(22) Date of filing: **22.12.2023**

(51) International Patent Classification (IPC):
**H01S 3/00** (2006.01)   **H01S 3/23** (2006.01)

(52) Cooperative Patent Classification (CPC):
**H01S 3/005; G02B 27/0927; H01S 3/2308; H01S 3/0064; H01S 3/2316; H01S 3/2333**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022   KR 20220184779**

(71) Applicant: **Lutronic Corporation
Goyang-si, Gyeonggi-do 10534 (KR)**

(72) Inventors:
- **CHO, Wook Rae
  10415 Goyang-si, Gyeonggi-do (KR)**
- **HAN, Kang Jeon
  10530 Goyang-si, Gyeonggi-do (KR)**
- **LEE, Jin Hu
  10534 Goyang-si, Gyeonggi-do (KR)**

(74) Representative: **Michalski Hüttermann & Partner
Patentanwälte mbB
Kaistraße 16A
40221 Düsseldorf (DE)**

(54) **LASER DEVICE**

(57)     Disclosed is a laser device including: a laser generator configured to generate a laser beam; a first amplifier configured to amplify energy of the laser beam; and a first laser beam width adjuster comprising an aperture disposed between the laser generator and the first amplifier to limit a width of the laser beam. The aperture includes: a light transmissive portion formed to be smaller than the width of the laser beam so as to allow a central part of the laser beam to pass through; a light shielding portion formed to encompass the light transmissive portion to block a periphery of the laser beam; and a soft edge portion formed between the light transmissive portion and the light shielding portion, so that a light transmittance of the light transmissive portion gradually decreases to a light transmittance of the light shielding portion.

FIG. 1

# Description

## BACKGROUND

### Field

The present disclosure relates to a laser device, and more specifically, to a laser device having an aperture for adjusting a width of a laser beam.

### Related Art

Lasers are used in various fields such as industrial, medical, and military applications. In particular, medical lasers are extensively used in surgery, internal medicine, ophthalmology, dermatology, dentistry, among others, as they can concentrate specific energy locally and enable non-invasive treatments.

Each laser device uses a plurality of optical elements to generate a laser beam having an energy size, profile, etc. corresponding to the treatment purpose. The aperture is an optical element that regulates the width of the laser beam, keeping only the high-intensity central part of the laser beam while eliminating the lower-intensity outer periphery.

## SUMMARY

The present disclosure provides a laser device having an aperture to prevent an unintended peak in energy intensity profile of a laser beam as the laser beam passes through the aperture.

In order to achieve the above object, a laser device according to an embodiment of the present disclosure includes: a laser generator configured to generate a laser beam; a first amplifier configured to amplify energy of the laser beam; and a first laser beam width adjuster comprising an aperture disposed between the laser generator and the first amplifier to limit a width of the laser beam.

The aperture according to an embodiment of the present disclosure includes: a light transmissive portion formed to be smaller than the width of the laser beam so as to allow a central part of the laser beam to pass through; a light shielding portion formed to encompass the light transmissive portion to block a periphery of the laser beam; a soft edge portion formed between the light transmissive portion and the light shielding portion, so that a light transmittance of the light transmissive portion gradually decreases to a light transmittance of the light shielding portion.

According to the embodiment disclosed in the present disclosure, it is possible to prevent an excessive peak in energy profile of a laser beam, thereby preventing optical elements, through which the laser beam passes within a laser device, from being damaged due to a high energy peak.

In addition, by preventing the occurrence of the excessive peak in the profile of a laser beam finally output from the laser device, it is possible to avoid an unintended harm to the human body due to the high-energy peak.

## BRIEF DESCRIPTION OF THE DRAWINGS

FIG. 1 is a diagram schematically showing main optical elements of a laser device according to an embodiment of the present disclosure;
FIG. 2 is a perspective view schematically showing an aperture according to an embodiment of the present disclosure;
FIG. 3 is a diagram schematically showing an aperture pattern of the aperture of FIG. 2;
FIG. 4 is a diagram illustrating a super-Gaussian distribution according to an embodiment of the present disclosure;
FIG. 5 is a diagram showing a method for generating an aperture pattern according to an embodiment of the present disclosure;
FIG. 6 is a diagram showing an aperture manufactured using the aperture pattern of FIG. 5;
FIG. 7 is a diagram showing the cross-sectional shape and profile of a laser beam at point A in a laser device with an aperture according to a comparative example;
FIG. 8 is a diagram showing the cross-sectional shape and profile of a laser at point A in a laser device having an aperture according to an embodiment of the present disclosure;
FIG. 9 is a diagram showing the cross-sectional shape and profile of a laser at point B in a laser device having the aperture according to the comparative example;
FIG. 10 is a diagram showing the cross-sectional shape and profile of a laser at point B in a laser device having the aperture according to an embodiment of the present disclosure.

## DETAILED DESCRIPTION

Hereinafter, embodiments of the laser device according to the present disclosure will be described with reference to the drawings. In the following description, the positional relationship between each constituting element is principally described based on the drawings. Additionally, it should be noted that the drawings may be simplified or exaggerated for the convenience of the description when necessary. Therefore, the present invention is not limited thereto, and it should be obvious that the present invention can be implemented by adding, changing, or omitting various apparatuses.

While terms including ordinal numbers, such as "first" and "second," etc., may be used to describe various components, such components are not limited by the above terms. The singular forms "a", "an" and "the" may include the plural forms as well, unless the context clearly indicates otherwise. The terms "comprises/includes" and/or "comprising/including" may specify the presence of stated features or components, but do not preclude the presence or addition of one or more other features or components. When a first element is referred to as being "on" or "connected to" a second element, the first element can be directly or indirectly on or connected to the second element, and one or more intervening elements may be present between the first element and the second element.

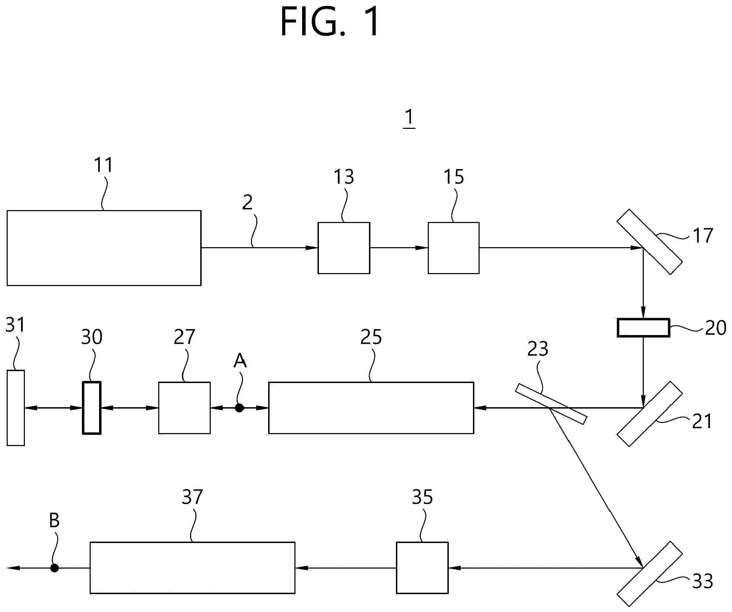

Hereinafter, the structure of a laser device according to an embodiment of the present disclosure will be described in detail with reference to FIGS. 1 to 10.

FIG. 1 is a diagram illustrating main optical elements of a laser device 1 according to an embodiment of the present disclosure. Referring to an embodiment shown in FIG. 1, the laser device 1 includes a laser generator 11, a first laser beam width adjuster 20, a first amplifier 25, a second laser beam width adjuster 30, a total reflection mirror 31, and a second amplifier 37.

The laser generator 11 is configured to generate a laser beam 2. The laser generator 11 may include a pumping light source for supplying the laser beam 2, a medium, and a saturable absorber. The pumping light source may generate the laser beam 2 and may be a laser diode or a flash lamp. The pumping light source may receive power from a power supply (not shown) to emit light and may provide the generated laser beam 2 to the medium.

The medium may amplify and emit the energy of the laser supplied from the pumping light source. For example, the medium may be Nd:Yag (neodymium-doped yttrium aluminum garnet), and may generate light of a wavelength of 1064nm oscillated by Nd:YAG. However, the aforementioned type of medium is merely an example, and it is also possible to generate light of various wavelengths using various laser media.

The saturable absorber may be positioned on one side of the medium to absorb light having a predetermined intensity level or less, while allowing light having the predetermined intensity level or more to pass through. The saturable absorber may be Cr4+:YAG (four-valence Chromium Doped Yttrium Aluminum Garnet). Cr4+:YAG is a passive Q-switcher for generating picosecond or nanosecond ultra-short pulses.

The laser beam 2 generated by the laser generator 11 may be a picosecond pulse laser beam. As an example, the energy of the picosecond pulse laser beam emitted from the laser generator 11 may be about 1 mJ, and the spatial shape of the laser beam may have a Gaussian shape with a diameter of about 0.7 mm.

The laser device 1 may further include a beam expander 13 and an optical isolator 15 on one side of the laser generator 11. The beam expander 13 may increase the width of a laser beam generated by the laser device 1. The optical isolator 15 may prevent a laser beam, which is reflected off a laser path and returns to the laser device 1, from causing damage to the laser device 1.

The first laser beam width adjuster 20 includes an aperture 100. The first laser beam width adjuster 20 may be disposed between the laser generator 11 and the first amplifier 25, which will be described later. The aperture 100 may be positioned to allow the center of the laser beam 2 to pass through. The aperture 100 may block the outer periphery of the laser beam 2, allowing only the central part of the laser beam 2 to pass through, thereby limiting the width of the laser beam 2. The aperture 100 of the first laser beam width adjuster 20 may be formed smaller than the width of the laser beam 2 passing through the first laser beam width adjuster 20. The specific shape of the aperture 100 will be described in detail later.

The first amplifier 25 may include a laser rod as a medium. The laser rod may extend from a first end side of the first amplifier 25 to a second end side, which is opposite to the first end side. The laser beam 2 having passed through the first laser beam width adjuster 20 may be supplied to the first end side of the first amplifier 25. The laser rod may amplify the energy of the supplied laser beam 2 and emit the laser beam 2 toward the second end side of the first amplifier 25. The laser rod may be Nd:Yag. However, the aforementioned type of medium is merely an example, and it is also possible to generate light of various wavelengths using various laser media.

The total reflection mirror 31 may be located at the second end side of the first amplifier 25. The total reflection mirror 31 may be formed to have a high reflectance for wavelengths of the laser beam 2 amplified by the first amplifier 25. The total reflection mirror 31 may be formed to reflect the laser beam 2 supplied from the second end side of the first amplifier 25 and redirect the reflected laser beam 2 back to the second end side of the first amplifier 25. The laser beam 2 supplied to the second end side of the first amplifier 25 may pass through the laser rod to have its energy amplified once again, and be then emitted to the first end side. As an example, the laser beam 2 generated with energy of about 1 mJ by the laser generator 11 may be amplified to 100 mJ or more after a round trip through the first amplifier.

The second laser beam width adjuster 30 includes an aperture 100. The second laser beam width adjuster 30 may be disposed between the first amplifier 25 and the total reflection mirror 31. The aperture 100 may be positioned to allow the center of the laser beam 2 to pass through. The aperture 100 may block the outer periphery of the laser beam 2, allowing only the central part of the laser beam 2 to pass through, thereby limiting the width of the laser beam 2. The aperture 100 of the second laser beam width adjuster 30 may be formed smaller than the width of the laser beam 2 passing through the second laser beam width adjuster 30. Additionally, the aperture 100 of the second laser beam width adjuster 20 may be different in size from the aperture 100 of the first laser beam width adjuster 20. The specific shape of the aperture 100 will be described in detail later.

A polarizer 23 may be formed to be placed at a location where a laser beam 2 supplied toward the first end side of the first amplifier 25 and a laser beam 2 emitted back again toward the first end side after a round trip through the first amplifier 25 pass through. Referring to an embodiment shown in FIG. 1, the polarizer 23 may be located on the first end side of the first amplifier 25. The polarizer 23 may be formed to transmit light components of polarized light parallel to a polarization axis formed in the polarizer 23 in the laser beam 2, while reflecting light components of other polarized light.

The laser beam 2 polarized after passing through the polarizer 23 is reflected from the total reflection mirror 31 to travel back and forth through the first amplifier 25 and then reaches the polarizer 23 again. A rotor 27 may be further included on a path that extends from the polarizer 23, passes through the total reflection mirror 31, and returns back to the polarizer 23. The rotor 27 may rotate the axis of the laser beam 2 passing therethrough. When the laser beam 2 reaches the polarizer 23 again, the laser beam 2 having an axis perpendicular to the polarization axis of the polarizer 23 may be reflected from the polarizer 23 and then directed to the second amplifier 37.

The second amplifier 37 may include a laser rod as a medium. The laser rod may extend from the first end side of the second amplifier 37 to the second end side, which is opposite to the first end side. The laser beam 2 whose path has been altered due to the polarizer 23 may be supplied to the first end side of the second amplifier 37 . The laser rod may amplify the energy of the supplied laser beam 2 and emit the laser beam 2 towards the second end side of the second amplifier 37. The laser load of the second amplifier 37 may be Nd:Yag. However, the aforementioned type of medium is merely an example, and it is also possible to generate light of various wavelengths using various laser media.

A beam expander 35 may be further included on the first end side of the second amplifier 37. The beam expander 35 may allow a laser beam not yet supplied to the second amplifier 37 to pass therethrough, thereby increasing a width of the laser beam.

The laser device 1 may include a plurality of optical path changing elements that change the path of the laser beam 2 within the laser device 1, and the plurality of optical path changing elements may be formed as a plurality of mirrors 17, 21, and 33. The plurality of mirrors 17, 21, and 33 may be disposed between a plurality of optical elements to change the path of the laser beam 2, so that the laser beam 2 can pass through each of the plurality of optical elements. The number and arrangement of the plurality of mirrors 17, 21, and 33 are not limited to the embodiment depicted in FIG. 1 and may vary based on the positions of the optical elements.

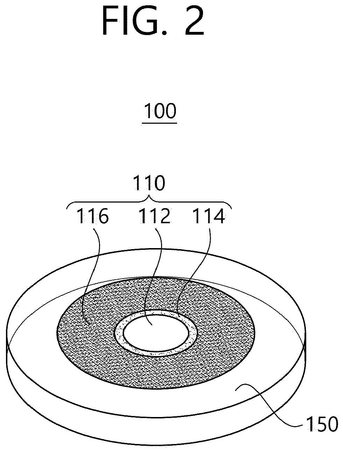

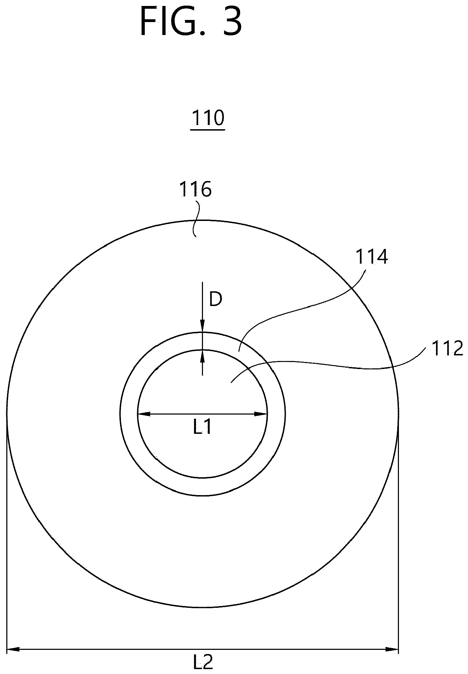

FIG. 2 is a perspective view showing an aperture 100 according to an embodiment of the present disclosure, and FIG. 3 is a plan view showing an aperture pattern 110 formed on the aperture of FIG. 2. Hereinafter, the aperture 100 according to an embodiment of the present disclosure will be described in detail with reference to FIGS. 2 and 3.

The aperture 100 is configured to control a width of a laser beam 2 in a first laser beam width adjuster 20 and a second laser beam width adjuster 30. The aperture 100 includes a light transmissive portion 112, which is formed to be smaller than the width of the laser beam 2 and allows the central part of the laser beam to pass through, and a light shielding portion 116, which is formed to encompass the light transmissive portion 112 and shields the outer periphery of the laser beam. Referring to an embodiment shown in FIG. 2, the light transmissive portion 112 and the light shielding portion 116 may be formed at the center of the aperture 100. The light transmissive portion 112 may be formed as a circular transparent portion. Preferably, the light transmissive portion 112 may have a light transmittance close to 100%. The light shielding portion 116 may be formed as an opaque portion encompassing the outer periphery of the light transmissive portion 112. Preferably, the light shielding portion 115 may have a light transmittance close to 0%. The shapes of the light shielding portion 116 and the light transmissive portion 112 are not limited as long as the shapes can adjust the light width of the laser beam 2.

Referring to the aperture pattern 110 shown in FIG. 3, an outer diameter L1 of the light transmissive portion 112 may be formed to be smaller than a width of the laser beam 2 incident on the aperture 100. The outer diameter L1 of the light transmissive portion 112 may be 60% to 70% of the width of the incident laser beam 2, preferably 65% to 69%, and more preferably 66% to 68%. Meanwhile, an outer diameter L2 of the light shielding portion 116 may be larger than the width of the laser beam 2 which has not yet passed through the aperture 100.

The aperture 100 further includes a soft edge portion 114 formed between the light transmissive portion 112 and the light shielding portion 116. Referring to an embodiment shown in FIG. 2, the soft edge portion 114 may be formed in a rim shape encompassing the light transmissive portion 112 with a constant width D, so that the light shielding portion 116 can encompass the outer periphery of the soft edge portion 114. Referring to an embodiment of the aperture pattern 110 shown in FIG. 3, a width D of the soft edge portion 114 may be 20% or less of the outer diameter L1 of the light transmissive portion 112, preferably 5% to 15%.

The soft edge portion 114 may be formed so that light transmittance gradually decreases from an inner periphery adjacent to the light transmissive portion 112 to an outer periphery adjacent to the light shielding portion 116. The inner periphery of the soft edge portion 114 may be formed to have the same light transmittance as that of the light transmissive portion 112, and the outer periphery of the soft edge portion 114 may be formed to have the same light transmittance as that of the light shielding portion 116. For example, assuming that the light transmissive portion and the light shielding portion have light transmittances of 100% and 0%, respectively, the light transmittance of the soft edge portion 114 may gradually decrease from 100% to 0% radially outward. Accordingly, it is possible to prevent the light transmittance of the aperture 100 from rapidly changing between the light shielding portion 116 and the light transmissive portion 112.

As an example, the change in light transmittance leading to the light shielding portion 116, the soft edge portion 114, and the light transmissive portion 112 may follow a super Gaussian distribution described by the following equation (where r represents a distance from the center, w represents a standard deviation, and n represents an integer equal to or greater than 2).

$$I(r) = I_p \exp\left[-2\left(\frac{r}{w}\right)^n\right]$$

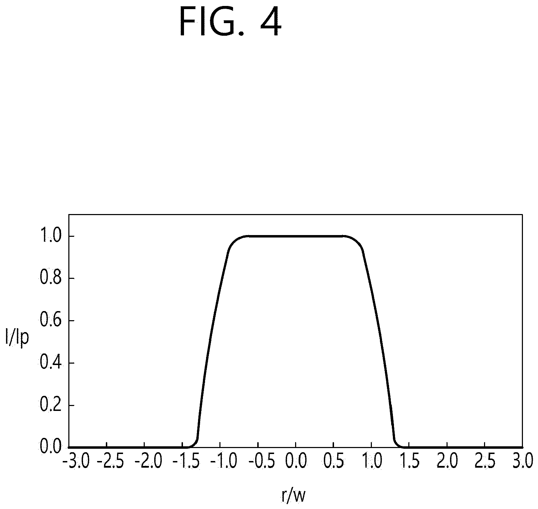

Referring to FIG. 4 which illustrates an example of the super Gaussian distribution, the super Gaussian distribution is formed with a relatively flat center and the size of the center of the distribution increases as the value of n increases. The flat center of the super Gaussian distribution may correspond to the light transmissive portion 112, the areas at both ends of the super Gaussian distribution may correspond to the light shielding portion 116, and the area where a value changes between the center and both ends of the super Gaussian distribution may correspond to the soft edge portion 114. For example, the value of n may range from 5 to 20. However, the super Gaussian distribution is merely an example of forming the soft edge portion 114, and the distribution of light transmittance of the aperture 100 including the soft edge portion 114 is not limited, as long as the light transmittances of the light transmissive portion 112 and light shielding portion 116 can change gradually.

In a conventional aperture, the aforementioned soft edge portion 114 is not included and an outer boundary of a transmissive portion is encompassed by an adjacent light shielding portion. As a result, a hard edge in which the light transmittance changes rapidly is formed at the boundary between the light transmissive portion and the light shielding portion of the conventional aperture. The hard edge causes a peak in the energy profile of a laser beam passing through the aperture, due to diffraction in the central area. The peak occurring in the energy profile of the laser beam may increase the intensity of the laser beam's energy and potentially cause damage to optical components as the laser beam passes through the optical components. In particular, the laser beam with the increased energy intensity due to the peak may damage the laser rod while passing through the amplifier. Additionally, if the peak remains in the energy of the laser beam finally output from the laser device, the high energy of the peak may cause damage to a human body when exposed to the laser beam.

The soft edge portion 114 may reduce the peak occurring in the energy profile of the laser beam 2 having passed through the aperture 100 due to diffraction caused by the aperture 100 itself. The above-mentioned effects will be described in detail along with experimental examples described later. The shape, width, and distribution of light transmittance of the soft edge portion 114 are not limited as long as the shape, width, and distribution of the light transmittance can reduce the peak occurring in the energy profile of the laser beam 2 having passed through the aperture 100, as described above.

Hereinafter, an embodiment of manufacturing the aperture pattern 110 will be described.

The aperture 100 may include a transparent plate 150 with a light transmissive portion 112 formed at the center thereof. The light transmittance of the transparent plate 150 is preferably close to 100%. The transparent plate 150 may be formed of one of glass, quartz, and applied silica. The material of the transparent plate 150 is not limited as long as the material can sufficiently secure the light transmittance of the light transmissive portion 112.

An anti-reflection layer may be formed on the transparent plate 150. The anti-reflection layer may prevent the reflection of a laser beam 2 entering the light transmissive portion 112 formed on the transparent plate 150. The anti-reflection layer may be formed on a surface of the transparent plate 150 using an anti-reflection coating.

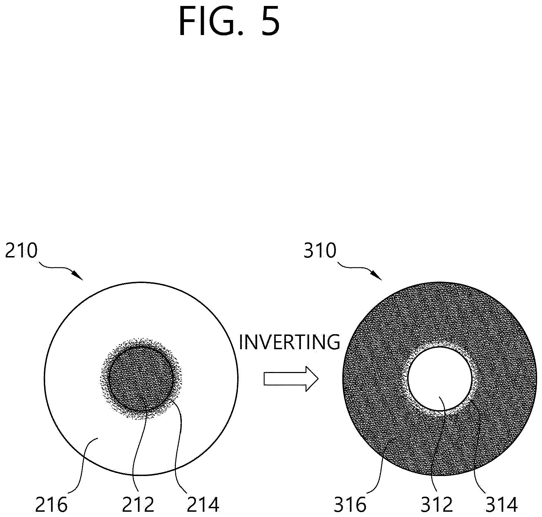

The aperture pattern 110 may be formed on a portion of the surface of the transparent plate 150 by laser-marking a marking image 310. FIG. 5 shows one embodiment of creating the marking image 310. Referring to FIG. 5, first, a desired aperture image 210 may be formed. The aperture image 210 may be composed of a set of dots arranged according to the light transmittance distribution of an aperture pattern to be designed. Referring to FIG. 5, the aperture image 210 may be a set of dots arranged according to a super Gaussian distribution. The aperture image 210 may include a central area 212 formed by a plurality of closely clustered dots, an outer area 216 encompassing the central area 212 with sparsely distributed dots, and a boundary area 214 where the density of dots increases toward the inner radius between the central area 212 and the outer area 216. A diameter of each dot is not limited as long as the diameter can indicate a change in density in the boundary area 214. Preferably, the diameter of each dot may correspond to the minimum marking unit of the laser-marking machine.

The marking image 310 may be formed by inverting the aperture image 210. The central area 212, boundary area 214, and outer area 216 of the aperture image 210 are formed to be a central area 312, boundary area 314, and outer area 316 of the marking image 310, respectively. Accordingly, the marking image 310 may include the central area 312 formed as an empty space, an outer area 316 encompassing the central area 312 and having a filled surface, and the boundary area 314 located between the central area 312 and the outer area 316 and having a surface that is gradually filled towards an outer periphery.

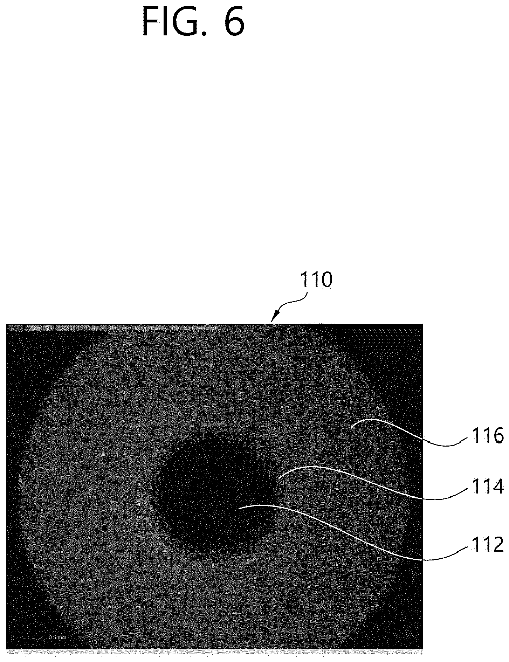

FIG. 6 shows an aperture pattern 110 manufactured using the marking image 310 of FIG. 5. Referring to FIG. 6, since no laser-marking is done in an area corresponding to the central area 312 of the marking image 310 on the transparent plate 150, the light transmissive portion 112 may be formed. The light transmissive portion 112 may have a unique light transmittance of the transparent plate 150. On the transparent plate 150, an area corresponding to the outer area 316 of the marking image 310 may be laser-marked with a high-density image to form the light shielding portion 116, which shields a laser beam. On the transparent plate 150, an area corresponding to the boundary area 314 of the marking image 310 may be laser-marked with decreasing density radially inward, thereby forming a soft edge portion 114.

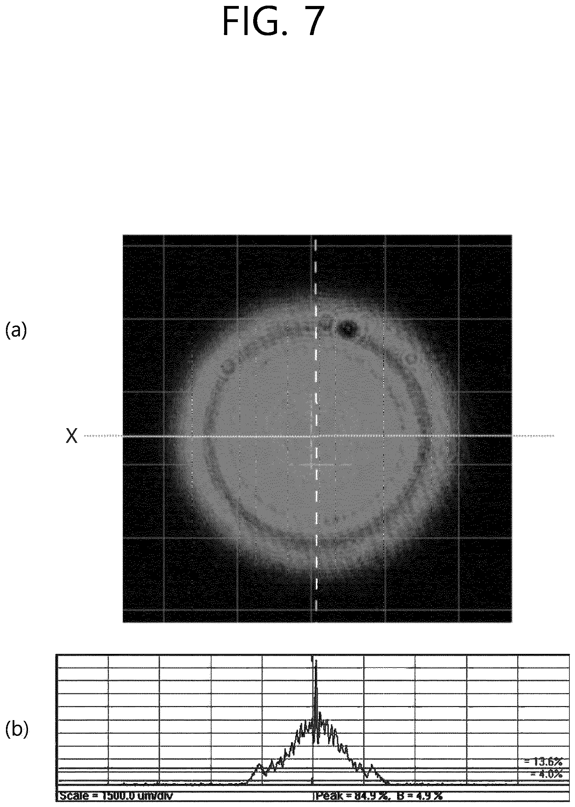

FIGS. 7 to 10 show experimental results concerning the application of an aperture without a soft edge, as shown in FIG. 1, in the laser device 1, compared to the application of an aperture 100 with a soft edge portion 114 according to an embodiment of the present disclosure. In FIGS. 7 to 10, (a) shows the intensity distribution of a laser beam cross-section and (b) shows the profile of laser intensity along the X-axis passing through the center. In (b) of each of FIGS. 7 to 10, the x-axis represents the radius from the center (unit um) while the y-axis represents the normalized intensity of a laser beam. Hereinafter, the effect of the soft edge portion 114 will be described with reference to the experimental results of FIGS. 7 to 10.

In one embodiment according to the present disclosure, a laser beam generated by the laser generator 11 has a width of 0.7 mm, while a laser beam reaching the first laser beam width adjuster 20 has a width of 2.9 mm. Therefore, the aperture 100 of the first laser beam width adjuster 20 is manufactured with an outer diameter L1 of 2.4 mm for the light transmissive portion 112, an outer diameter L2 of 10 mm for the light shielding portion 116, and a width D of 0.3 mm for the soft edge portion 114. In addition, the laser beam reaching the second laser beam width adjuster 30 after passing through a plurality of optical elements has a width of 3.8 mm. Therefore, the aperture 100 of the second laser beam width adjuster 30 is manufactured with an outer diameter L1 of 3.4 mm for the light transmissive portion 112, an outer diameter L2 of 10 mm for the light shielding portion 116, and a width D of 0.2mm for the soft edge portion 114.

Meanwhile, in the comparative example, a laser beam generated by the laser generator 11 has the same width, and the apertures of the first laser beam width adjuster and the second laser beam width adjuster are manufactured with outer diameters of 2.4 mm and 3.4 mm, respectively, for the light transmissive portion.

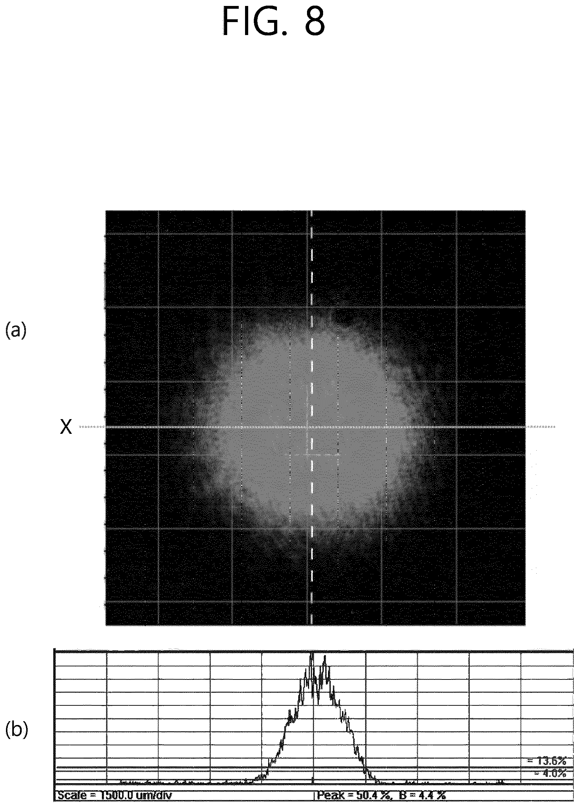

FIGS. 7 and 8 show the intensity and profile of a laser beam cross section at point A passing through the first amplifier 25 in the comparative example and the embodiment according to the present disclosure, respectively.

Comparing FIGS. 7 (b) and 8 (b), when the soft edge portion 114 is not applied, a high-intensity peak is formed at the center of the laser beam's profile after passing through the first amplifier 25. On the other hand, when the soft edge portion 114 is applied, no high-intensity peak is formed at the center of the laser beam's profile even after passing through the first amplifier 25.

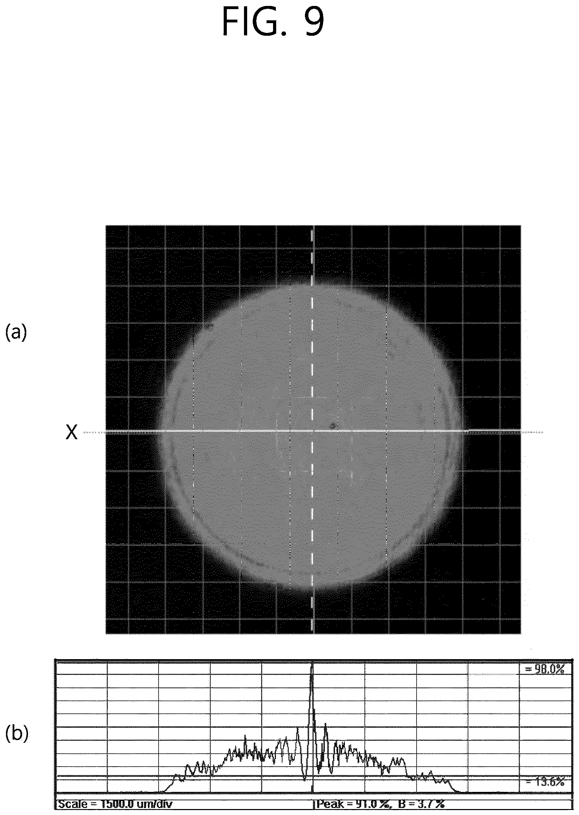

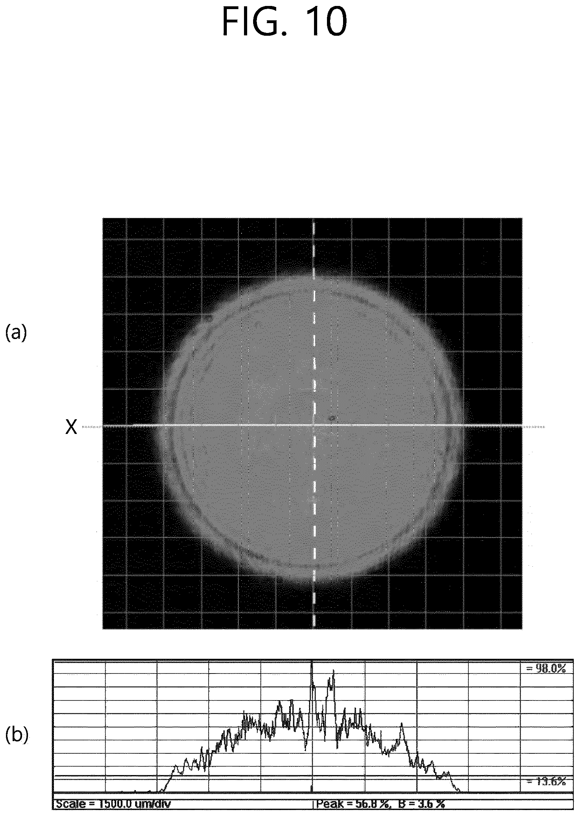

FIGS. 9 and 10 show the intensity and profile of a laser beam cross section at point B passing through the second amplifier 37 in the comparative example and the embodiment according to the present disclosure, respectively.

Comparing FIGS. 9 (b) and 10 (b), when the soft edge portion 114 is not applied, a high intensity peak is formed in the center of the laser beam's profile after passing the second amplifier 37. On the other hand, when the soft edge portion 114 is applied, no high intensity peak is not formed in the center of the laser beam's profile even after passing the second amplifier 37.

So far, several embodiments of the laser device according to the present invention have been described, but the present disclosure is not limited to the above-described embodiments. It will be apparent to those skilled in the art that modifications and variations can be made without departing from the spirit and scope of the invention as defined by the appended claims.

**Claims**

1.   A laser device comprising:

a laser generator configured to generate a laser beam;
a first amplifier configured to amplify energy of the laser beam; and
a first laser beam width adjuster comprising an aperture disposed between the laser generator and the first amplifier to limit a width of the laser beam,
wherein the aperture comprises:

a light transmissive portion formed to be smaller than the width of the laser beam so as to allow a central part of the laser beam to pass through,
a light shielding portion formed to encompass the light transmissive portion to block a periphery of the laser beam, and
a soft edge portion formed between the light transmissive portion and the light shielding portion, so that a light transmittance of the light transmissive portion gradually decreases to a light transmittance of the light shielding portion.

2. The laser device of claim 1, wherein the soft edge portion is formed in a rim shape encompassing the light transmissive portion to reduce a peak formed at a center of energy profile of the laser beam passing through the light transmissive portion.

3. The laser device of claim 2, wherein a width of the rim shape is 5% or more and 10% or less of an inner diameter of the light shielding portion.

4. The laser device of claim 1, wherein an inner diameter of the light shielding portion is 60% or more and 70% or less of the width of the laser beam generated by the laser generator.

5. The laser device of claim 1, wherein the aperture has a light transmittance profile in a super Gaussian shape.

6. The laser device of claim 1, wherein:

   the aperture comprises a transparent plate having an anti-reflection layer formed on a surface thereof and the light transmissive portion formed at a center thereof, and
   at least a portion of the transparent plate is formed as an opaque aperture pattern encompassing the light transmissive portion to form the soft edge portion and the light shielding portion.

7. The laser device of claim 6, wherein the aperture pattern is formed by inverting an image that is composed of a set of dots distributed in a super Gaussian shape.

8. The laser device of claim 7, wherein the aperture is formed by laser-marking the aperture pattern on the surface of the transparent plate.

9. The laser device of claim 1, further comprising:

   a total reflection mirror reflecting the laser beam toward the first amplifier, so that the laser beam having passed through the first amplifier passes through the first amplifier again; and
   a second laser beam width adjuster disposed between the first amplifier and the total reflection mirror and comprising the aperture for limiting the width of the laser beam.

10. The laser device of claim 9, wherein the second laser beam width adjuster is formed so that the laser beam having passed through the first amplifier but not yet reflected from the total reflection mirror and the laser beam having reflected from the total reflection mirror but not yet passed through the first amplifier again pass through the second laser beam width adjuster, thereby reducing a peak in the energy profile of the laser.

11. The laser device of claim 10, further comprising a second amplifier configured to amplify energy of the laser beam that has passed through the first amplifier.

# FIG. 1

EP 4 404 399 A2

# FIG. 2

# FIG. 3

<u>110</u>

# FIG. 4

# FIG. 5

210

310

INVERTING

216    212    214

316    312    314

# FIG. 6

# FIG. 7

(a)

(b)

# FIG. 8

(a)

(b)

# FIG. 9

(a)

(b)

# FIG. 10

(a)

X

(b)